# EUROPEAN PATENT APPLICATION

(11) **EP 2 138 964 A1**
(43) Date of publication of application: **30.12.2009**
(21) Application number: 08305340.5
(22) Date of filing: 27.06.2008
(51) Int. Cl.: G06Q 10/00, H04L 29/00

(54) **Social networking protocol for mobile social networks**

(71) Applicant: THOMSON Licensing, 92100 Boulogne-Billancourt (FR)
(72) Inventor: Pietilainen, Anna-Kaisa, 75019 Paris (FR); Oliver, Earl, Waterloo Ontario N2L 4S8 (CA); Lebrun, Jason, Sacramento CA 95816 (US)
(74) Representative: Ruellan-Lemonnier, Brigitte

(57) **Abstract**

The invention concerns a method of communication in a communication network, using a communication device (D), comprising means for exchanging data with at least another communication device, characterized in that it comprises the following steps:
• a scanning step, during which said device (D) seeks to identify potential candidate devices (D1, D2, ..., Dn) for inter-exchange of data ;
• an identification step, during which said device (D) collects profiles (P1, P2, ..., Pn) that correspond to users of said previously identified devices (D1, D2, ..., Dn), wherein a profile is a set of information associated to a given user ;
• a selection step, during which, said device (D) selects a sub-set of profiles (P'1, P'2, ..., P'p) among said previously collected profiles (P1, P2, ..., Pn) ; and
• a step consisting in exchanging content data between said device (D) and devices corresponding to said previously selected profiles (P'1, P'2, ..., P'p).

The invention also concerns a communication device (D) comprising means for exchanging data with at least another communication device.

## Description

### FIELD OF THE INVENTION

The present invention pertains to the field of communication networks.

The present invention more particularly relates to a social networking protocol for mobile social networks.

### BACKGROUND OF THE INVENTION

According to the online encyclopedia Wikipedia, a social network service uses software to build online social networks for communities of people who share interests and activities or who are interested in exploring the interests and activities of others.

Most services are primarily web-based and provide a collection of various ways for users to interact, such as chat, messaging, email, video, voice chat, file sharing, blogging, discussion groups, and so on. Social networking has revolutionized the way people communicate and share information with one another in today's society. Various social networking websites are being used by millions of people everyday on a regular basis and it now seems that social networking is a part of everyday life. The main types of social networking services are those which contain directories of some categories (such as former classmates), means to connect with friends (usually with self-description pages), and recommender systems linked to trust. Popular methods now combine many of these, with MySpace and Facebook being the most widely used in North America; Bebo, MySpace, Skyrock Blog, Facebook and Hi5 in parts of Europe; Orkut and Hi5 in South America and Central America; and Friendster, Orkut and CyWorld in Asia and the Pacific Islands. (Facebook, MySpace, Bebo, Skyrock, Hi5, Orkut, Friendster and CyWorld are registered Trademarks).

There have been some attempts to standardize these services to avoid the need to duplicate entries of friends and interests (see the FOAF standard and the OpenSocial Initiative), but this has led to some concerns about privacy.

Applications in the virtual world such as social networks and instant messaging have done much to remove the tyranny of geography. Beyond friendship and exchanges between two parties, which will be referred to here as dyadic communication, virtual groups have proliferated, creating communities centered around interests varying from gaming to editing Wikipedia pages. Despite the increased power and reach of virtual communities, the power of physical communities based on physical contact and closeness will continue to be an essential part of human relationships.

Further, physical communities have a different set of capabilities that are complemented by but not subsumed by virtual communities. It is possible to e-mail a friend in the virtual world who is in another country and a different time zone; but it is only possible to share a meal, or go to a play with a friend in the physical world.

Most users do belong to both virtual and physical communities today but it is the belief of the inventors of the present invention that few networking experiences leverage both worlds. Rather than look on virtual communities and physical communities as competing entities, the inventors of the present invention prefer to think of them as complementary entities.

This approach leads to interesting research problems.

First, technologies that were built to create virtual communities must be extended to meet the constraints of physical communities. Second, there is a need to understand how virtual and physical communities can work together to leverage each other so that users can move between these two worlds in a way that enhances both worlds.

The Serendipity project, created by the MIT (Massachusetts Institute of Technology, Cambridge, Massachusetts, USA), provided an interesting answer to the first point above [N. Eagle and A. Pentland. "Social serendipity: Mobilizing social software. » IEEE Pervasive Computing, 4(2), 2005.]. The members of this project observed that the market for cell phones was growing exponentially even in 2004; today cell phone sales are ten times the sales of PCs and laptops, reaching 1 billion in 2006 alone. Further, while a certain fraction of the world could probably not afford a PC, cell phones are becoming ubiquitous in terms of coverage with people in developing countries. In addition, most cell phones have low powered Bluetooth radio interface that provides cheap (and essentially free) communication between two devices that are reasonably close to each other. Serendipity uses the cell phone as a bridge between the physical and the virtual communities: the cell phones locate individuals in the user's proximity and communicate with a central server that contains information about users and provides several methods of matchmaking. They envisage applications in people meeting at conferences, enterprise introductions, and dating services. Similar ideas can be found in a number of commercial products.

The systems of the prior art, such as Serendipity, have the following limitations:
- **Use of a central server:** All existing systems use a central server that does the matchmaking between compatible users. Connecting through a central server is a serious restriction to the viral nature of the system.
- **Dyadic Communication:** The net result of an interaction is that two users are enabled to begin a physical communication. This does not go far enough to build what can be called an "*ad hoc community*".
- **No platform for further development:** While the existing social networks are more mature and hence possibly more open to the idea of open APIs ("*Application Programming Interfaces*"), the current generation of social networking software is closed and likely to remain so for the near future.

### SUMMARY OF THE INVENTION

The present invention aims at solving the above-mentioned drawbacks that are present in the solutions of the prior art.

The inventors of the present invention have considered a mobile ad hoc network setting, where users of Personal Area Network (for instance, but not exclusively Bluetooth) enabled devices meet and communicate opportunistically as when random people meet in a cafe, or researchers meet at a conference. Ad hoc opportunistic contacts are built on the basis of predefined relationships in online social networks. The approach of the present invention distinguishes itself from the prior art by at least three characteristics:
- the removal of a need for a central server to conduct exchanges ;
- the focus on the transitive closure of relationships
- and the use of existing social networks as a reference point for understanding whether an exchange is desirable.

To this purpose, the inventors of the present invention have designed a social interaction communication software package that has been implemented on smartphones. Three applications have been developed on top of the core software: ad hoc social connections, epidemic newsgroups and asynchronous messaging.

The present invention is defined, in its broader sense, as a method of communication in a communication network, using a communication device (D), comprising means for exchanging data with at least another communication device, **characterized in that** it comprises the following steps:
- a scanning step, during which said device (D) seeks to identify potential candidate devices (D1, D2, ..., Dn) for inter-exchange of data ;
- an identification step, during which said device (D) collects profiles (P1, P2, ..., Pn) that correspond to users of said previously identified devices (D1, D2, ..., Dn), wherein a profile is a set of information associated to a given user ;
- a selection step, during which, said device (D) selects a sub-set of profiles (P'1, P'2, ..., P'p) among said previously collected profiles (P1, P2, ..., Pn) ; and
- a step consisting in exchanging content data between said device (D) and devices corresponding to said previously selected profiles (P'1, P'2, ..., P'p).

In the context of the present invention, a profile as defined here is preferably extracted from a database of an existing social network, such as, and not exclusively, Facebook.

It should be noted that the method according to the present invention can be used as a tool for internetworking different social networks of different types.

Preferably, said selection step uses contact duration of previously established contacts between devices as selection criterion.

Advantageously, said selection step uses contact frequency of previously established contacts between devices as selection criterion.

Preferably, said selection step uses knowledge about active applications as selection criterion.

According to a particular embodiment, said selection step uses information contained in said previously collected profiles (P1, P2, ..., Pn) as selection criterion.

For instance, common interests of users corresponding to said profiles can be used for selecting recipients of group messages.

In this context, using the social network to make forwarding decisions provides an advantage called "*incentive advantage*".

According to an embodiment, a connection between said device (D) and another device among said candidate devices (D1, D2,..., Dn) starts with an authentication step.

Advantageously, a profile is represented by a checksum.

The present invention also concerns a communication device (D) comprising means for exchanging data with at least another communication device, **characterized in that** it comprises means for:
- identifying potential candidate devices (D1, D2, ..., Dn) for inter-exchange of data ;
- collecting profiles (P1, P2, ..., Pn) that correspond to users of said previously identified devices (D1, D2, ..., Dn), wherein a profile is a set of information associated to a given user ;
- selecting a sub-set of profiles (P'1, P'2, ..., P'p) among said previously collected profiles (P1, P2, ..., Pn) ; and
- exchanging content data between said device (D) with devices corresponding to said previously selected profiles (P'1, P'2, ..., P'p).

In this context, some advantages provided by the present invention are as follows:
- **Decentralized operation:** the software as built according to the principles of the present invention does not rely on centralized server(s) for the discovery and interaction process. In the present invention, direct peer interactions are used to create a community. Such direct interactions are both cheaper, more private, and may allow spontaneous and unforeseen interactions.
- **Leveraging an existing social network:** Because of the interface and issues of harassing one's friends to join a specific social network, the system according to the principles of the present invention is able to bootstrap from existing social network, such as Facebook, which is currently one of the largest and most popular online social network, and whose APIs are publicly available.
Note that while the software as built according to the principles of the present invention is designed to take advantage of contact opportunities, the inventors have consider that users will connect periodically to the virtual network (for instance, but not exclusively Facebook) to download relevant aspects of the social network that allow disconnected operation, and to update their profile based on the new social connections they have made with the software as built according to the principles of the present invention.
- **Transitive closure of relationships:** An opportunistic relationship, as proposed in the context of the present invention, is not dyadic. Instead, temporary relationships create a graph just as in social networks.
   When two users decide to have an exchange, the software as built according to the principles of the present invention provides a copy of each user's social community before the exchange. The result is that the community grows with each exchange.
- **Providing incentive:** One of the arguments against collaborative opportunistic forwarding is the one of incentive. Forwarding a message for someone unknown might be an issue as it drains batteries and uses phone resource. In order to address this issue, all data transmission are performed in a social network overlay, i.e. a device only forwards data for friends, or for people who share the same interests.
   It is believed that this greatly increases the likelihood that users will participate in such a system.
- **Platform for development:** some applications on top were built on top of the community substrate. However, it is believed that an open API (Application Programming Interface) would be the basis for other unforeseen applications to be written by other programmers.
   Furthermore, the platform, as built according to the principles of the present invention, is used to gather data transfer statistics that can provide new insight into the behaviour and expectations for data communications in an opportunistic networking environment.

The software, as built according to the principles of the present invention, can be implemented on Microsoft Windows Mobile smartphones, but also on mobile phones using the Symbian OS or might also be implemented on the Apple iPhone (Microsoft, Windows, Symbian, Apple and iPhone are registered Trademarks).

### BRIEF DESCRIPTION OF THE DRAWINGS

The following detailed description will be better understood with the drawings, in which:
- Figure 1 shows an overview of the architecture of the software, as built according to the principles of the present invention ;
- Figure 2 represents the steps composing the method according to the present invention; and
- Figure 3 shows an example of device according to the present invention.

### DETAILED DESCRIPTION

The inventors of the present invention have built a platform to discover, share and use the "invisible" social networks that form around every mobile device user.

The method according to the present invention mimics human behaviour in a social environment - look around, try to identify people or points of interests, prioritize, and finally build a social interaction with one or more people. As with human interaction, some of these activities might be "exclusive" of others.

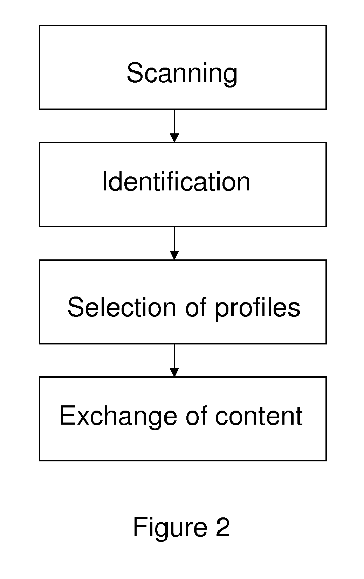

Figure 2 represents the steps composing the method according to the present invention: scanning, identification, selection of profiles and exchange of content.

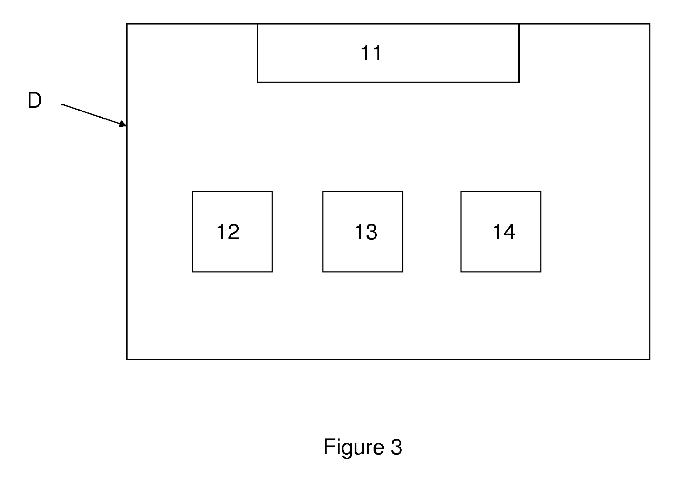

The communication device D shown on Figure 3 comprises a communication interface 11, a processor 12, a volatile memory 13 and a non-volatile memory 14.

The communication interface 11 could for instance be a Bluetooth interface.

The processor 12, the volatile memory 13 and the non-volatile memory 14 are used for storage and processing of/for the software components as built according to the principles of the present invention.

The initial "look around" is implemented as a scanning phase, where a device tries to identify all potential candidates for social interaction. This defines the device neighbourhood. It is followed by the identification step which consists of collecting the social profiles for each device in the neighbourhood, and selecting the subset of candidates for social interaction. By a social profile, the inventors refer to the set of information associated with a particular user such as the friendly name and other personal details, a list of friends, the interests of the user and the groups the user belongs to (compare to a user profile in any common online social network).

The selection criteria for social interaction depend mostly on friendship, common social interests and relationships in virtual communities. Prioritization is then achieved using multiple criteria, including contact duration and frequency, active applications, etc. Up to this stage, only "social" information and contact statistics have been exchanged. Content comes next, once a "link" (and more exactly a peer network) has been established between the user and its social ad-hoc neighbors.

The social networking protocol according to the present invention follows this progression of contact and information exchange, but uses opportunistic networking technologies to streamline the process in order to meet new, previously unknown people and exchange information with them in a variety of scenarios.

In pseudo code, the social networking protocol according to the present invention can be represented as below:

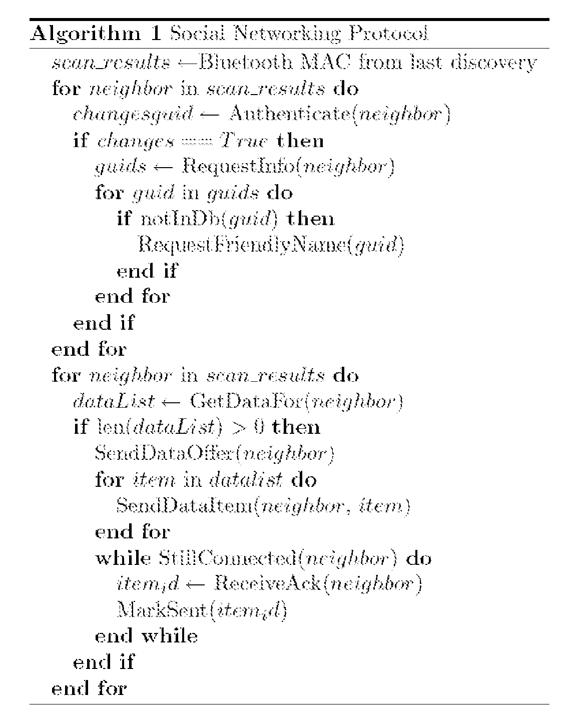

In the following, Bluetooth is used as networking protocol. It should be noted that any other Personal / Local area networking protocol could also be used, instead of Bluetooth.

The first step in the social networking protocol is to discover devices in the neighbourhood. The scanning features of Bluetooth are used to identify this neighbourhood.

For each device found in the neighborhood, Bluetooth returns a MAC address. The scanning node designates here the node which has just completed an entire Bluetooth discovery. A neighbouring node designates here any one of the nodes that was returned as a result of a discovery. Each participant in the system has a globally unique identifier (GUID) that represents that person in the social networking space.

Once the neighborhood is known, the scanning device attempts to establish a direct connection with each neighbouring node, in order to get its user's social profile.

This step can be called the "*social metadata update*" phase.

Once completed, it is followed by an "*application data exchange*" phase where the scanning device reconnects with the neighbouring devices to whom it has data to send. The social networking protocol according to the present invention executes this continuous loop of social metadata updates followed by application data exchanges. The periodicity can be tuned depending on various human and technology factors.

Note that every connection between two devices begins with an authentication exchange. In the current prototype, the authentication exchange is simply the exchange of the device's user GUID. If the GUID exchanged does not match the MAC address of the device, then communication is aborted. However, in future implementations it will be possible to match a user GUID on multiple MAC addresses.

During the social metadata update phase, the scanning node receives metadata update from neighbouring devices. The inventors chose to implement a one-way data transfer as it significantly simplifies the complexity of the implementation. However, there is no technical reason for not performing a symmetric update.

During the authentication step described above, the neighbouring node returns to the scanning node a checksum representing its current social profile. If the neighbouring node has made changes to its profile since the last contact with the scanning node, the checksum has changed and the neighbouring node sends its new profile to the scanning node. If the checksum has not changed, no update is performed.

As before, this phase begins with an authentication exchange, which is followed by a message indicating the number of data items to be transferred. Then, data items are transferred one at a time; each data item starts with a header that contains message payload size, destination, and a unique message identifier followed by the actual data chunk.

A policy should be chosen for determining the order in which to connect to neighbors, as well as for selecting which items to send first. In a particular embodiment, neighbors are connected in the following order: friends, shared interests, friends-of-friends. Data items are simply passed in a first-come first-sent manner.

As the neighbouring node receives data items, it responds with an acknowledgment per data item. The scanning node uses these acknowledgments to mark data items in the database as successfully sent so it does not unnecessarily re-transmit.

Three applications were developed to run on top of the above architecture. The application framework has been designed to make it easy for third party developers to write new applications.

The first application simply displays to the user the set of neighbouring devices with their social profile and provides an interface to manage the user's social network (i.e. add and remove friends, change interests).

The user is informed of the presence of a friend or a potential new friend by a set of distinctive rings, vibrations, or indicators/messages displayed on the device's screen.

A potential new friend is currently defined as a friend of a friend or as someone sharing at least one interest in their social profile. This social network management application also provides the bridge between the ad hoc social network stored within the application according to the present invention and an existing online social network such as Facebook.

A Facebook plug-in has also been built in order to initialize a user's social profile with realistic social information.

After downloading a user's online social network on the device, their Facebook ID (a value globally unique to Facebook users) is used as their GUID that is defined in the application according to the present invention.

Similarly, Facebook users belong to groups which are represented by fixed and unique GUIDs.

Facebook group GUIDs are used as a simple solution to the complex problem of representing the taxonomy of interest topics. During periods of Internet connectivity, users of the application according to the present invention can synchronize their ad hoc social network back to their Facebook account.

The second asynchronous messaging application was developed to allow friends to message each other. This application is modelled around a conventional instant messaging application. It displays a contact list containing the user's friends. Selecting a friend opens a window containing previously exchanged messages in chronological order. Users may reply to a discussion thread or create a new message destined to their friends.

Note that these messages can be relayed by intermediate node toward destination given that these intermediates nodes are either friends of the sender or of the destination.

The third epidemic newsgroup application allows discussions among multiple participants, based on a specific topic of interest (e.g. newsgroup). It is best compared to a mobile ad hoc "Usenet" 2. The user interface is similar to the asynchronous messaging application, but the message threads are displayed within the context of a particular interest group, rather than for a particular friend. The common interest is also used as a message forwarding criterion.

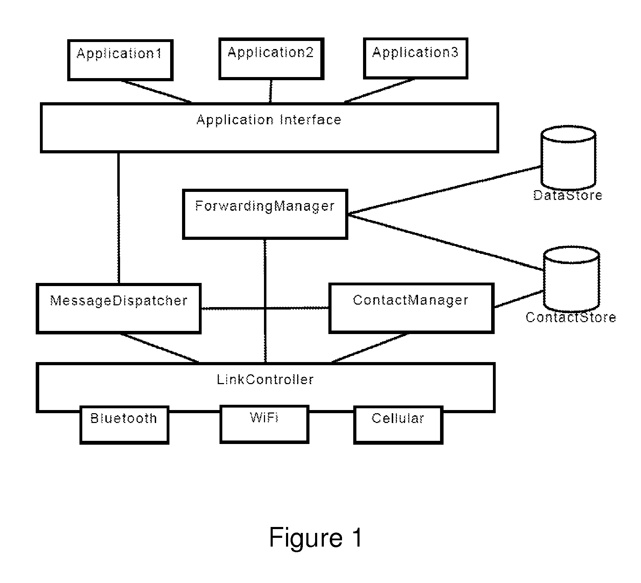

The central components of the architecture of the system according to the present invention are the two databases, one for contacts and social profiles, and one for application data. These two "storage means" are described below. Then, the modules which manage and act upon the data in these "storage means" are discussed. The relationship between the main components of the system is outlined in Figure 1.

The Contact Store provides persistent storage of device contact statistics, including MAC addresses for each device seen, and the user metadata. The user metadata (i.e. the social profile) consists of the user name and some optional details such as an email, a list of friends and a list of interests. The Contact Store maintains relationships between the system-specific GUIDs for users, friends, interests and applications.

Internally, MAC addresses are used to uniquely identify neighbouring devices. The Contact Store can manage a user with multiple devices, or with a device containing multiple-interfaces, by associating the user's GUID with each MAC address. The Contact Store is updated during the metadata update phase.

The Data Store is responsible for storing and providing efficient access to the data entering the system through the Application Interface and data exchanged between devices implementing the application according to the present invention. This store maintains data items, which are autonomous pieces of data. Each data item may have one or more destinations associated with it. The Data Store also stores information about neighbours who have already received a given item, and a TTL (Time To Live) for each item, to prevent redundant transfers.

The Link Controller is the lowest layer in the architecture of the application according to the present invention. The Link Controller provides a common interface for sending and receiving data across a variety of network interfaces. The Link Controller is responsible for periodically scanning for neighbouring devices or access points. This component receives data on any of the available interfaces. The Link Controller provides a common API for all network interfaces that it supports and it hides network technology specifics from the rest of the application.

The Network Message Dispatcher component receives interface agnostic messages from the Link Controller and dispatches them to the proper component in the present architecture, after determining whether a message is a control message or a data message. Data messages are passed to the Application Interface, while control messages are passed to the Contact Manager.

The Contact Manager coordinates the communication and social metadata updates with the neighbouring devices. It uses the Contact Store to persistently store all friends, interests, and other metadata associated with encountered users of the application according to the present invention. The Contact Manager maintains changes to the set of users of the application according to the present invention that are in the current neighborhood, which is used by other components like the Forwarding Manager and applications. The Forwarding Manager matches data to be forwarded with potential destinations or next-hops, using information found in the Contact Store. For each message stored in transit, it makes a decision on what the next hop should be, based on the current state of the neighborhood. It also controls the aging of messages by using a TTL. The Forwarding Manager has been designed to support an arbitrary number of forwarding algorithms; for instance epidemic forwarding within nodes who are friends, friends of friends or share similar interests.

The Application Interface is designed so that developers can easily create new applications that use the application according to the present invention. Each application in the context of the present invention has a unique GUID that it registers with the Application Interface at startup. The application then simply communicates with the system according to the present invention using a loop-back socket. The Application Interface decides how to handle local messages by using the application GUID found in these messages.

The application according to the present invention can for instance, but not exclusively, be implemented in programming language C++, so that it can run on a variety of mobile devices. It can run for instance on Windows Mobile, but by abstracting the operating systems APIs from the core application, it can also run on Symbian and other C++ based platforms.

The above specification, examples and drawings provide a complete description of the method according to the present invention. Since many embodiments of the invention can be made without departing from the spirit and scope of the invention, the invention resides in the claims herein after appended.

## Claims

1. Method of communication in a communication network, using a communication device (D), comprising means for exchanging data with at least another communication device, **characterized in that** it comprises the following steps:
• a scanning step, during which said device (D) seeks to identify potential candidate devices (D1, D2, ..., Dn) for inter-exchange of data ;
• an identification step, during which said device (D) collects profiles (P1, P2, ..., Pn) that correspond to users of said previously identified devices (D1, D2, ..., Dn), wherein a profile is a set of information associated to a given user ;
• a selection step, during which, said device (D) selects a sub-set of profiles (P'1, P'2, ..., P'p) among said previously collected profiles (P1, P2, ..., Pn) ; and
• a step consisting in exchanging content data between said device (D) and devices corresponding to said previously selected profiles (P'1, P'2, ..., P'p).

2. Method of communication according to claim 1, **characterized in that** said selection step uses contact duration of previously established contacts between devices as selection criterion.

3. Method of communication according to claim 1 or 2, **characterized in that** said selection step uses contact frequency of previously established contacts between devices as selection criterion.

4. Method of communication according to claim 1, 2, or 3, **characterized in that** said selection step uses knowledge about active applications as selection criterion.

5. Method of communication according to any of the preceding claims, **characterized in that** said selection step uses information contained in said previously collected profiles (P1, P2, ..., Pn) as selection criterion.

6. Method of communication according to any of the preceding claims, **characterized in that** a connection between said device (D) and another device among said candidate devices (D1, D2, ..., Dn) starts with an authentication step.

7. Method of communication according to any of the preceding claims, **characterized in that** a profile is represented by a checksum.

8. Communication device (D) comprising means for exchanging data with at least another communication device, **characterized in that** it comprises means for:
• identifying potential candidate devices (D1, D2, ..., Dn) for inter-exchange of data ;
• collecting profiles (P1, P2, ..., Pn) that correspond to users of said previously identified devices (D1, D2, ..., Dn), wherein a profile is a set of information associated to a given user ;
• selecting a sub-set of profiles (P'1, P'2, ..., P'p) among said previously collected profiles (P1, P2, ..., Pn) ; and
• exchanging content data between said device (D) with devices corresponding to said previously selected profiles (P'1, P'2, ..., P'p).
